# EUROPÄISCHE PATENTSCHRIFT

(11) **EP 3 124 706 B1**
(45) Veröffentlichungstag und Bekanntmachung des Hinweises auf die Patenterteilung: **31.01.2018**
(21) Anmeldenummer: 16176564.9
(22) Anmeldetag: 28.06.2016
(51) Int. Cl.: E02D 7/18

(54) **NEIGUNGSMESSER FÜR EINE VIBRATIONSRAMME**
INCLINOMETER FOR A VIBRATION RAMMER
DISPOSITIF DE MESURE D'INCLINAISON POUR UN PILON VIBRANT

(30) Priorität: 28.07.2015 AT 506752015
(43) Veröffentlichungstag der Anmeldung: 01.02.2017
(73) Patentinhaber: Swietelsky Baugesellschaft m.b.H., 4020 Linz (AT)
(72) Erfinder: MAINZ, Gerhard, 8832 Oberwölz (AT)
(74) Vertreter: Weiser, Andreas

(56) Entgegenhaltungen:
- JP-A- 2009 068 262

## Beschreibung

Die vorliegende Erfindung betrifft einen Neigungsmesser für eine Vibrationsramme, insbesondere zum Anbau an einen Eisenbahnkran, Bagger od.dgl. Die Erfindung betrifft ferner eine Vibrationsramme mit einem solchen Neigungsmesser, die zum Anbau an einen Eisenbahnkran, Bagger od.dgl. ausgebildet und vom Grundsatz her unter anderem aus der JP 2009 06 8262 A bekannt ist.

Vibrationsrammen werden im Bau, insbesondere Eisenbahnbau, dazu verwendet, um Rohr-, Spund-, H- oder Holzpfähle in felsfreien Untergrund zu rammen. Vibrationsrammen werden dazu meist hydraulisch betrieben und erzeugen mit z.B. zwei gegenläufigen Unwuchten eine senkrecht gerichtete Vibration bestimmter Schwingungsfrequenz, infolge derer der Untergrund liquidisiert wird und der Pfahl in diesen gleichsam einsinkt. Beispielsweise wird zum Setzen eines Mastes für eine Eisenbahn-Oberleitung zunächst mit einer Vibrationsramme ein Rohrpfahl von 5 bis 8 m Länge in den Untergrund gerammt, an welchem anschließend der Mast verankert wird. Um eine senkrechte Ausrichtung des Mastes zu erreichen, ist bereits der Pfahl senkrecht einzurammen. Herkömmliche Neigungsmesser bzw. Inklinometer sind für den Einsatz an einer Vibrationsramme aufgrund der dabei auftretenden Vibrationen völlig ungeeignet. Stattdessen wird heute meist bis zu einer Teiltiefe senkrecht vorgebohrt und/oder der Pfahl vor dem Einrammen ausgerichtet und erforderlichenfalls das Einrammen für weitere Ausrichtungsmessungen unterbrochen.

Die Erfindung setzt sich zum Ziel, einen Neigungsmesser zu schaffen, der zur Montage an einer Vibrationsramme und zur Neigungsmessung während des Rammbetriebs geeignet ist.

Dieses Ziel wird gemäß einem ersten Aspekt der Erfindung mit einem Neigungsmesser der einleitend genannten Art erreicht, welcher umfasst:
ein zur Montage an der Vibrationsramme ausgebildetes Gehäuse mit einer innenliegenden ersten Lagergabel, in welcher eine erste Achse eines Kreuzstücks drehgelagert ist,
ein Pendel mit einer obenliegenden zweiten Lagergabel, in welcher eine zur ersten normale zweite Achse des Kreuzstücks drehgelagert ist, und
an jeder Lagergabel jeweils zumindest einen daran abgestützten Winkelsensor zum Messen des Verdrehwinkels der in dieser Lagergabel gelagerten Achse und daraus Ermitteln der Neigung des Pendels gegenüber dem Gehäuse.

Eine solche kardanische Aufhängung des Pendels innerhalb des Gehäuses gibt dem Pendel die zur Neigungsmessung notwendige Beweglichkeit; zugleich ist diese Anordnung ausreichend robust, um den schwierigen Einsatzbedingungen in Verbindung mit einer Vibrationsramme auch über einen längeren Zeitraum standzuhalten.

Besonders günstig ist es, wenn das Pendel eine Schwingungsdauer infolge seiner Länge und Masseverteilung hat, die zumindest das Zehnfache, bevorzugt etwa das Fünfzigfache, der Schwingungsdauer der Nennfrequenz der Vibrationsramme ist. Auf diese Weise werden Wechselwirkungen zwischen dem schwingend gelagerten Pendel und der Vibration der Vibrationsramme weitestgehend vermieden, wodurch sich einerseits die Genauigkeit der Neigungsmessung auch im laufenden Rammenbetrieb erhöht und andererseits der Neigungsmesser weniger verschleißt und dadurch eine höhere Lebensdauer erzielt.

In einer vorteilhaften Variante hat das Pendel eine Länge von 0,3 bis 1,2 m, bevorzugt 0,5 bis 0,7 m, mit einer über seine Länge weitgehend homogenen Masseverteilung. Ein solches Pendel hat eine sehr lange Schwingungsdauer im Vergleich zu jener einer typischen Vibrationsramme, wodurch bei geeigneter Auslegung Wechselwirkungen und insbesondere Resonanzen infolge der Vibration der Vibrationsramme vermieden werden können, und kann dabei äußerst einfach und robust, z.B. aus einem massiven Block, aufgebaut sein.

Zur Erzielung eines einfachen Aufbaus des Neigungsmessers und zum einfachen Ein- oder Anbau an die Vibrationsramme hat das Gehäuse bevorzugt im Inneren einen im Wesentlichen allgemein-zylindrischen Raum zur Aufnahme des ebenfalls im Wesentlichen allgemein-zylindrischen Pendels.

Besonders vorteilhaft ist es, wenn das Pendel zumindest an seinem unteren Ende kegel- oder pyramidenstumpfförmig ist. Dies ermöglicht - bei nahezu unveränderter Masseverteilung und damit Schwingungsdauer - einen größeren Maximalausschlag des Pendels im Inneren eines Gehäuses vorgegebener Größe, d.h. einen größeren maximalen Verdrehwinkel der Achsen in den Lagergabeln, und damit einen erweiterten Messbereich. Besonders bevorzugt entspricht dabei die Mantelneigung des Kegel- oder Pyramidenstumpfes dem maximalen Verdrehwinkel der jeweiligen Achse. Dadurch kommt bei Vollausschlag des Pendels nicht eine schmale Kante des unteren Endes, sondern die breitere Mantelfläche des Kegel- oder Pyramidenstumpfes an der Innenseite des Gehäuses zur Anlage, wodurch Pendel und Gehäuse im rauen Betrieb gleichermaßen geschont werden.

Zur zusätzlichen Dämpfung von auf das Pendel übertragenen Vibrationen und zum Oberflächenschutz im Inneren des Neigungsmessers ist es vorteilhaft, wenn das Gehäuse zumindest teilweise mit einer viskosen Flüssigkeit, bevorzugt Öl, gefüllt ist, in welche das Pendel eintaucht.

Gemäß einer bevorzugten Ausführungsform hat das Gehäuse verschließbare Wartungsöffnungen im Bereich der Winkelsensoren. Die Winkelsensoren und deren Lagerung ist dadurch zu Prüfungs- und Wartungszwecken einfach zugänglich.

Ein besonders günstiger Einbau wird möglich, wenn die Winkelsensoren jeweils einen Stator und einen dagegen verdrehbaren Rotor haben, wobei der Stator an einer der Lagergabeln abgestützt ist und der Rotor koaxial zu der in der genannten Lagergabel gelagerten Achse an einem ihrer Enden sitzt. Solche rotatorischen Winkelsensoren sind in robusten, präzisen Varianten erhältlich und in der genannten Einbauart besonders gut zugänglich bzw. erforderlichenfalls einfach austauschbar.

Bevorzugt sind die Winkelsensoren Potentiometer. Diese sind einfach in Aufbau und Auswertung und in besonders robuster Form erhältlich.

Gemäß einem zweiten Aspekt schafft die Erfindung eine Vibrationsramme zum Anbau an einen Eisenbahnkran, Bagger od.dgl., welche sich durch einen Neigungsmesser mit den vorgenannten Merkmalen auszeichnet, dessen Gehäuse an der Vibrationsramme montiert ist. Bezüglich der Wirkung und Vorteile wird auf die vorangegangenen Ausführungen zum Neigungsmesser verwiesen.

Bevorzugt hat die Vibrationsramme eine Nennfrequenz von 30 bis 60 Hz, besonders bevorzugt 40 bis 50 Hz. Eine solche Vibrationsfrequenz bzw. Schwingungsdauer, die zu der eingangs genannten Liquidisierung des Untergrunds in einem Ausmaß führt, welches das Eindringen eines Pfahls in den Untergrund wesentlich begünstigt, vermeidet ein Wechselwirken mit der wesentlich längeren Schwingungsdauer des Neigungsmessers.

Die Erfindung wird nachstehend anhand von in den beigeschlossenen Zeichnungen dargestellten Ausführungsbeispielen näher erläutert. In den Zeichnungen zeigt:
Fig. 1 einen Eisenbahnkran mit einer am Ausleger fixierten Vibrationsramme, an welcher erfindungsgemäß ein Neigungsmesser montiert ist, in einer schematischen Perspektivansicht;
Fig. 2 eine Ausführungsform des Neigungsmessers aus Fig. 1 in einem perspektivischen Schnitt von schräg oben; und
Fig. 3 ein Detail einer alternativen Variante des Neigungsmessers aus Fig. 1 in einem perspektivischen Schnitt von schräg unten.

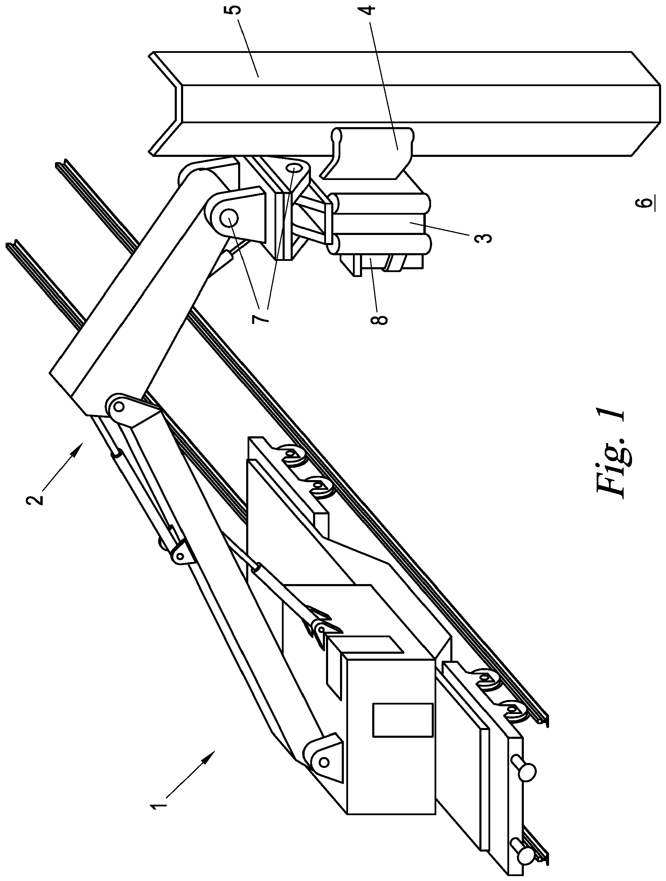

Ein Eisenbahnkran 1 trägt gemäß Fig. 1 an seinem Ausleger 2 eine Vibrationsramme 3. Die Vibrationsramme 3 hat eine seitliche Greifzange 4, welche einen Pfahl 5 (hier: einen Spundpfahl, in anderen Fällen z.B. einen Rohr-, H- oder Holzpfahl) hält, um diesen in einen Untergrund 6 zu rammen. Dazu erzeugt die Vibrationsramme 3 mithilfe zweier gegenläufiger Unwuchten (nicht sichtbar) eine Vibration in senkrechter Richtung mit einer Nennfrequenz von z.B. 30 bis 60 Hz, bevorzugt 40 bis 50 Hz. Durch die Vibration wird der Untergrund 6, z.B. Erde, Schotter od.dgl., fluidisiert und der Pfahl 5 darin gleichsam versenkt.

Die Vibrationsramme 3 und/oder der Kranausleger 2 haben zumindest ein steuerbares Gelenk 7, mithilfe dessen die Vibrationsramme 3 ausgerichtet werden kann, um den Pfahl 5 senkrecht in den Untergrund 6 zu rammen. An bzw. in der Vibrationsramme 3 ist ein Neigungsmesser 8 montiert, z.B. mit einer Klammer oder einem Flansch, mit dessen Hilfe die korrekte Ausrichtung der Vibrationsramme 3 und infolgedessen ein senkrechtes Einrammen des Pfahls 5 in den Untergrund 6 sichergestellt wird.

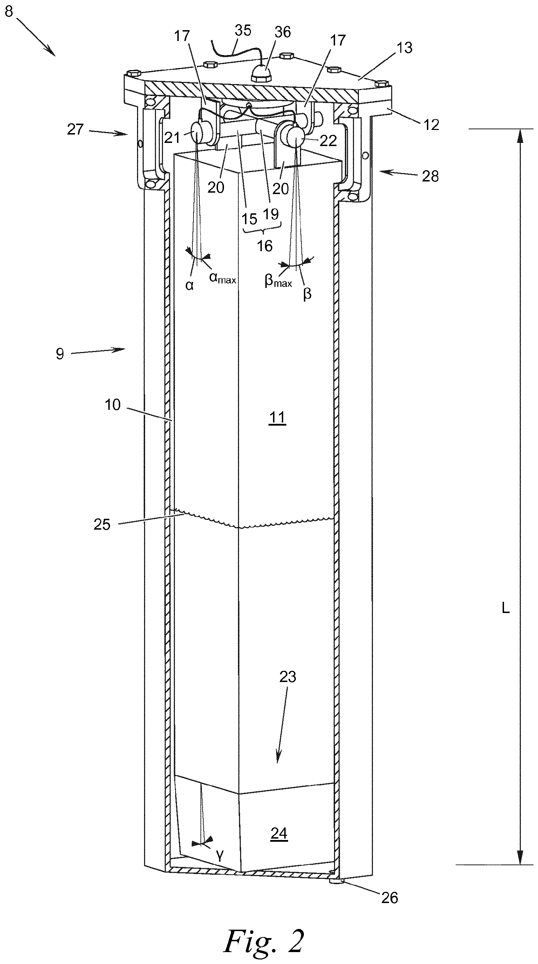

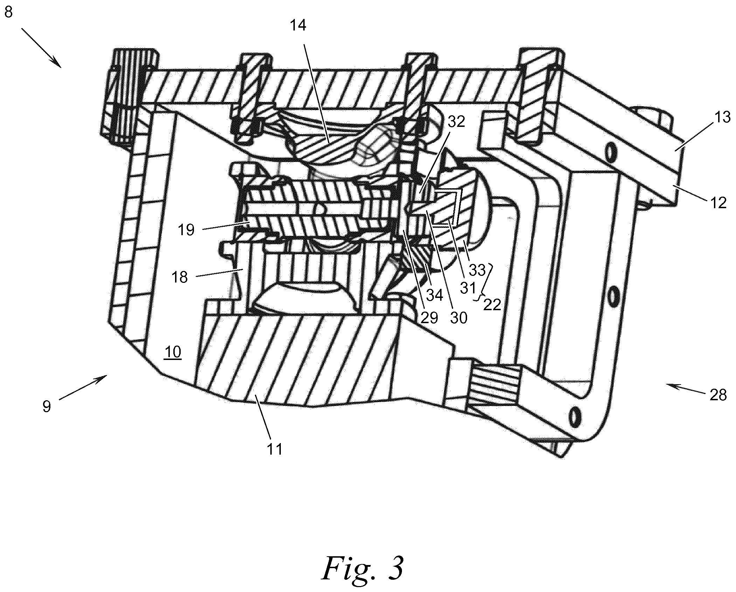

Anhand der Fig. 2 und 3 werden im Folgenden Aufbau, Wirkungsweise und Ausführungsvarianten des Neigungsmessers 8 erläutert.

Der Neigungsmesser 8 hat ein Gehäuse 9, in dessen Innerem ein Raum 10 zur Aufnahme eines Pendels 11 ausgebildet ist. Im vorliegenden Beispiel der Fig. 2 und 3 ist der Raum 10 zylindrisch mit etwa quadratischem Querschnitt und nach oben hin mit einem an einen Flansch 12 geschraubten Deckel 13 des Gehäuses 9 zumindest weitgehend verschlossen. Der Raum 10 - und mit ihm das Gehäuse 9 - können jede allgemein-zylindrische oder sogar eine andere Form haben und das Gehäuse 9 dabei besonders an die Montage an oder in der Vibrationsramme 3 angepasst sein. Der Deckel 13 des Gehäuses 9 könnte alternativ z.B. an einer offenen Seite des Raums 10 anzuflanschen sein und/oder das Gehäuse 9 statt eines Flansches 12 z.B. eine Nut haben, in welche der Deckel 13 eingeschoben und darin fixiert ist.

Im Inneren des Gehäuses 9 ist das Pendel 11 kardanisch, d.h. in zwei Normalrichtungen schwingend, aufgehängt. Dazu hat einerseits das Gehäuse 9 eine innenliegende erste Lagergabel 14 (Fig. 3), in welcher eine erste Achse 15 eines Kreuzstücks 16 drehgelagert ist. Im Beispiel von Fig. 2 ist die erste Lagergabel 14 durch ein vom Deckel 13 nach innen abstehendes Zungenpaar 17 und den dazwischenliegenden Teil des Deckels 13 gebildet. Andererseits hat das Pendel 11 eine obenliegende zweite Lagergabel 18 (Fig. 3), in welcher eine zur ersten Achse 15 normale zweite Achse 19 des Kreuzstücks 16 drehgelagert ist. Auch die zweite Lagergabel 19 ist im Beispiel der Fig. 2 durch ein vom Pendel 11 nach oben abstehendes Zungenpaar 20 und den zwischenliegenden Teil des Pendels 11 gebildet. Die beiden Lagergabeln 14, 19 und das Kreuzstück 16 bilden somit die genannte kardanische Aufhängung des Pendels 11.

Das Kreuzstück 16 kann - anders als im Beispiel von Fig. 2 - z.B. die Form eines Würfels oder einer Kugel mit daraus geeignet auskragenden Achsstummelpaaren haben. Ferner könnten erste und zweite Achse 15, 19 des Kreuzstücks 16 zueinander windschief liegen.

Das Pendel 11 ist allgemein-zylindrisch, hier: mit quadratischem Querschnitt, und dabei an die Form des Gehäuses 9, insbesondere den Innenquerschnitt und die Länge des Raums 10, bzw. umgekehrt die Form des Gehäuses 9 an das Pendel 11, angepasst, z.B. können beide quadratischen oder kreisrunden Querschnitt oder das Pendel 11 kreisrunden Querschnitt und der Raum 10 quadratischen Innenquerschnitt haben.

An jeder Lagergabel 14, 18 ist zum Messen des jeweiligen Verdrehwinkels α, β der in dieser Lagergabel 14, 18 gelagerten Achse 15, 19 zumindest ein Winkelsensor 21, 22 abgestützt, sodass aus den Verdrehwinkeln α, β die Neigung des Pendels 11 gegenüber dem Gehäuse 9 bzw. des Gehäuses 9 gegenüber der vom Pendel 11 eingenommenen senkrechten Richtung ermittelbar ist.

Optional kann das Pendel 11 an seinem unteren Ende 23 die Form eines Pyramidenstumpfs 24, wie im Beispiel der Fig. 2 dargestellt, oder eines Kegelstumpfs haben. Dabei entspricht die Mantelneigung γ des Kegel- oder Pyramidenstumpfs 24 bevorzugt dem maximalen Verdrehwinkel αₘₐₓ bzw. βₘₐₓ der jeweiligen Achse 15, 19.

Das Pendel 11 hat zur Verringerung der Wechselwirkung mit der Vibration der Vibrationsramme 3 optional eine - von den Achsen 15, 19 bis zu seinem unteren Ende 23 gemessene - solche Länge L und Masseverteilung, dass es bei freiem Schwingen eine Schwingungsdauer aufweist, die zumindest das Zehnfache, bevorzugt etwa das Fünfzigfache, der Schwingungsdauer der Vibration der Vibrationsramme 3 bei deren Nennfrequenz beträgt. Im Beispiel von Fig. 2 hat das Pendel 11 eine Länge L von 0,3 bis 1,2 m, bevorzugt 0,5 bis 0,7 m, und ist aus massivem Stahl gefertigt; es hat dabei, wie im Schnitt von Fig. 2 symbolisiert, eine über seine Länge L weitgehend homogene Masseverteilung.

Es versteht sich, dass das Pendel 11 alternativ eine andere Länge L haben und/oder aus anderem Material oder verschiedenen Materialien aufgebaut sein und dabei den Großteil seiner Masse z.B. im Bereich seines unteren Endes 23 haben kann.

Wenn gewünscht, kann das Gehäuse 9 zumindest teilweise mit einer viskosen Flüssigkeit 25, z.B. einem zähflüssigen Öl, gefüllt sein, in welche bzw. welches das Pendel 11 eintaucht. Zum Entleeren kann das Gehäuse 9 ferner eine Ablassschraube 26 haben. Optional hat das Gehäuse 9 verschließbare Wartungsöffnungen 27, 28 im Bereich der Winkelsensoren 21, 22.

Gemäß einer weiteren Ausführungsform nach Fig. 3 ist die zweite Lagergabel 18 als separater Bauteil ausgebildet, der an das Pendel 11 geschraubt ist. Die in diesem Beispiel ebenfalls separat ausgebildete erste Lagergabel 14 ist an den Deckel 13 geschraubt. In dieser Ausführungsform ist die zweite Achse 19 eine Hohlwelle, in welche einseitig ein Verbindungsstück 29 eingeschraubt bzw. verdrehsicher eingesteckt ist. In dem Verbindungsstück 29 an einem der Enden der zweiten Achse 19 und zu dieser koaxial ist eine Sensorachse 30 eines Rotors 31 des Winkelsensors 22 mit einer Wurmschraube 32 (in Fig. 3 nur als Bohrung 32 für die Aufnahme einer Wurmschraube dargestellt) fixiert. Der Rotor 31 ist in einem Stator 33 des Winkelsensors 22 drehbar gelagert, welcher mithilfe eines Halterings 34 an der zweiten Lagergabel 18 abgestützt ist. Rotor 31 und Stator 33 bilden so einen Rotations-Winkelsensor 22.

Die Winkelsensoren 21, 22 können von jeder in der Technik bekannten Art sein, z.B. optische, magnetische, magnetoresistive, piezoelektrische oder ohmsche Widerstands-Sensoren, wie Potentiometer. Dabei sind die Winkelsensoren 21, 22, wie in den Beispielen der Fig. 2 und 3, rotationssensorisch oder z.B. über Hebel betätigt und linearsensorisch; auch könnte jeder der Winkelsensoren 21, 22 zweiteilig sein, beispielsweise mit einer an einer Achse 15, 19 angebrachten Skala als ersten Teil, welche von dem zweiten an der zugehörigen Lagergabel 14, 18 gelagerten Teil aus optisch abgetastet wird.

Je nach Sensortype wird ein Messsignal des gemessenen Verdrehwinkels α, β von den Winkelsensoren 21, 22 über Signalleitungen 35 drahtgebunden, z.B. durch eine verschraubbare Öffnung 36 im Gehäusedeckel 13, oder drahtlos durch das Gehäuse 9 hindurch zur Auswertung nach außen geleitet. Die Auswertung kann durch Bedienpersonal im Eisenbahnkran, z.B. anhand einer optischen Anzeige des gemessenen Verdrehwinkels α, β, bzw. unter Zuhilfenahme einer elektronischen Auswerteeinheit erfolgen, welche ferner, wenn gewünscht, die Ausrichtung der Vibrationsramme 3 steuern kann.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Neigungsmesser für eine Vibrationsramme, insbesondere zum Anbau an einen Eisenbahnkran, Bagger od.dgl., umfassend:
ein zur Montage an der Vibrationsramme (3) ausgebildetes Gehäuse (9) mit einer innenliegenden ersten Lagergabel (14), in welcher eine erste Achse (15) eines Kreuzstücks (16) drehgelagert ist,
ein Pendel (11) mit einer obenliegenden zweiten Lagergabel (18), in welcher eine zur ersten normale zweite Achse (19) des Kreuzstücks (16) drehgelagert ist, und
an jeder Lagergabel (14, 18) jeweils zumindest einen daran abgestützten Winkelsensor (21, 22) zum Messen des Verdrehwinkels (α, β) der in dieser Lagergabel (14, 18) gelagerten Achse (15, 19) und daraus Ermitteln der Neigung des Pendels (11) gegenüber dem Gehäuse (9).

2. Neigungsmesser nach Anspruch 1, **dadurch gekennzeichnet, dass** das Pendel (11) eine Schwingungsdauer infolge seiner Länge (L) und Masseverteilung hat, die zumindest das Zehnfache, bevorzugt etwa das Fünfzigfache, der Schwingungsdauer der Nennfrequenz der Vibrationsramme (3) ist.

3. Neigungsmesser nach Anspruch 1 oder 2, **dadurch gekennzeichnet, dass** das Pendel (11) eine Länge (L) von 0,3 bis 1,2 m, bevorzugt 0,5 bis 0,7 m, mit einer über seine Länge (L) weitgehend homogenen Masseverteilung hat.

4. Neigungsmesser nach einem der Ansprüche 1 bis 3, **dadurch gekennzeichnet, dass** das Gehäuse (9) im Inneren einen im Wesentlichen allgemein-zylindrischen Raum (10) zur Aufnahme des ebenfalls im Wesentlichen allgemein-zylindrischen Pendels (11) hat.

5. Neigungsmesser nach einem der Ansprüche 1 bis 4, **dadurch gekennzeichnet, dass** das Pendel (11) zumindest an seinem unteren Ende (23) kegel- oder pyramidenstumpfförmig ist.

6. Neigungsmesser nach Anspruch 5, **dadurch gekennzeichnet, dass** die Mantelneigung des Kegel- oder Pyramidenstumpfes (24) dem maximalen Verdrehwinkel (αₘₐₓ, βₘₐₓ) der jeweiligen Achse (15, 19) entspricht.

7. Neigungsmesser nach einem der Ansprüche 1 bis 6, **dadurch gekennzeichnet, dass** das Gehäuse (9) zumindest teilweise mit einer viskosen Flüssigkeit (25), bevorzugt Öl, gefüllt ist, in welche das Pendel (11) eintaucht.

8. Neigungsmesser nach einem der Ansprüche 1 bis 7, **dadurch gekennzeichnet, dass** das Gehäuse (9) verschließbare Wartungsöffnungen (27, 28) im Bereich der Winkelsensoren (21, 22) hat.

9. Neigungsmesser nach einem der Ansprüche 1 bis 8, **dadurch gekennzeichnet, dass** die Winkelsensoren (21, 22) jeweils einen Stator (33) und einen dagegen verdrehbaren Rotor (31) haben, wobei der Stator (33) an einer der Lagergabeln (14, 18) abgestützt ist und der Rotor (31) koaxial zu der in der genannten Lagergabel (14, 18) gelagerten Achse (15, 19) an einem ihrer Enden sitzt.

10. Neigungsmesser nach einem der Ansprüche 1 bis 9, **dadurch gekennzeichnet, dass** die Winkelsensoren (21, 22) Potentiometer sind.

11. Vibrationsramme zum Anbau an einen Eisenbahnkran, Bagger, od.dgl., **gekennzeichnet durch** einen Neigungsmesser (8) nach einem der Ansprüche 1 bis 10, dessen Gehäuse (9) an der Vibrationsramme (3) montiert ist.

12. Vibrationsramme nach Anspruch 11, **dadurch gekennzeichnet, dass** sie eine Nennfrequenz von 30 bis 60 Hz, bevorzugt 40 bis 50 Hz, hat.

## Claims

1. Inclinometer for a vibratory ram, especially for mounting on a railway crane, excavator, or the like, comprising:
a housing (9) configured for mounting onto the vibratory ram, having a first inside bearing fork (14), in which a first axis (15) of a crosspiece (16) is rotatably mounted,
a pendulum (11) with an overhead second bearing fork (18), in which a second axis (19), which is normal to the first axis, of the crosspiece (16) is rotatably mounted, and,
at each bearing fork (14, 18), at least one angle sensor (21, 22) supported thereon for measuring the rotation angle (α, β) of the axis (15, 19) mounted in this bearing fork (14, 18) and for therefrom determining the inclination of the pendulum (11) with respect to the housing (9).

2. Inclinometer according to claim 1, **characterised in that** the pendulum (11) has an oscillation period due to its length (L) and mass distribution, which is at least the tenfold, preferably approximately the fiftyfold, of the oscillation period of the nominal frequency of the vibratory ram(3).

3. Inclinometer according to claim 1 or 2, **characterised in that** the pendulum (11) has a length (L) of 0.3 to 1.2 m, preferably 0.5 to 0.7 m, with a mass distribution that is largely uniform over its length (L).

4. Inclinometer according to any one of the claims 1 to 3, **characterised in that** the housing (9) has, in its inside, a substantially generally-cylindrical chamber (10) for receiving the also substantially generally-cylindrical pendulum (11).

5. Inclinometer according to any one of the claims 1 to 4, **characterised in that** the pendulum (11) is at least on its lower end (23) in the shape of a truncated cone or pyramid.

6. Inclinometer according to claim 5, **characterised in that** the inclination of the envelope of the truncated cone or pyramid (23) corresponds to the maximum rotation angle (αₘₐₓ, βₘₐₓ) of the respective axis (15, 19) .

7. Inclinometer according to any one of the claims 1 to 6, **characterised in that** the housing (9) is at least partially filled with a viscous liquid (25), preferably oil, into which the pendulum (11) is immersed.

8. Inclinometer according to any one of the claims 1 to 7, **characterised in that** the housing (9) has closable maintenance openings (27, 28) in the area of the angle sensors (21, 22) .

9. Inclinometer according to any one of the claims 1 to 8, **characterised in that** the angle sensors (21, 22) each have a stator (33) and a rotor (31) rotatable thereto, wherein the stator (33) is supported on one of the bearing forks (14, 18) and the rotor is located, coaxially to the axis (15, 19) mounted in said bearing fork (14, 18), on one of the ends of said axis.

10. Inclinometer according to any one of the claims 1 to 9, **characterised in that** the angle sensors (21, 22) are potentiometers.

11. Vibratory ram for mounting on a railway crane, excavator, or the like, **characterised by** an inclinometer (8) according to any one of the claims 1 to 10, whose housing (9) is mounted on the vibratory ram (3).

12. Vibratory ram according to claim 11, **characterised in that** it has a nominal frequency of 30 to 60 Hz, preferably 40 to 50 Hz.

## Revendications

1. Inclinomètre pour une sonnette batteur vibrante, notamment pour le montage sur une grue ferroviaire, une excavatrice ou similaire, comprenant :
un boîtier (9) conçu pour le montage sur la sonnette batteur vibrante (3) avec une première fourche de palier (14) située à l'intérieur, dans laquelle un premier axe (15) d'une traverse (16) est disposé en pouvant tourner,
un pendule (11) avec une deuxième fourche de palier (18) située vers le haut, dans laquelle un deuxième axe (19) de la traverse (16) est logé, normal par rapport au premier, en pouvant tourner, et
sur chaque fourche de palier (14, 18), respectivement au moins un capteur d'inclinaison (21, 22) y étant appuyé pour la mesure de l'angle de rotation (α, β) de l'axe (15, 19) logé dans cette fourche de palier (14, 18) et pour la détermination à partir de celle-ci de l'inclinaison du pendule (11) par rapport au boîtier (9).

2. Inclinomètre selon la revendication 1, **caractérisé en ce que** le pendule (11) a une période d'oscillation en raison de sa longueur (L) et de sa distribution de la masse, qui est égale à au moins dix fois, de préférence environ cinqante fois, la période d'oscillation de la fréquence nominale de la sonnette batteur vibrante (3).

3. Inclinomètre selon la revendication 1 ou 2, **caractérisé en ce que** le pendule (11) a une longueur (L) de 0,3 à 1,2 m, de préférence de 0,5 à 0,7 m, avec une distribution de la masse largement homogène sur sa longueur (L) .

4. Inclinomètre selon l'une des revendications 1 à 3, **caractérisé en ce que** le boîtier (9) a à l'intérieur un espace (10) essentiellement de forme cylindrique générale pour la réception du pendule (11), qui est également essentiellement de forme cylindrique générale.

5. Inclinomètre selon l'une des revendications 1 à 4, **caractérisé en ce que** le pendule (11) est en forme de quille ou de pyramide tronquée au moins sur son extrémité inférieure (23) .

6. Inclinomètre selon la revendication 5, **caractérisé en ce que** l'inclinaison de l'enveloppe de la quille ou de la pyramide tronquée (24) correspond à l'angle de rotation maximal (αₘₐₓ, βₘₐₓ) de l'axe (15, 19) correspondant.

7. Inclinomètre selon l'une des revendications 1 à 6, **caractérisé en ce que** le boîtier (9) est rempli au moins partiellement avec un liquide visqueux (25), de préférence avec de l'huile, dans lequel trempe le pendule (11).

8. Inclinomètre selon l'une des revendications 1 à 7, **caractérisé en ce que** le boîtier (9) a des orifices de maintenance (27, 28), pouvant se fermer, dans la région des capteurs d'angles (21, 22).

9. Inclinomètre selon l'une des revendications 1 à 8, **caractérisé en ce que** les capteurs d'angles (21, 22) ont respectivement un stator (33) et un rotor (31) pouvant tourner par rapport au stator, où le stator (33) est appuyé sur l'une des fourches de palier (14, 18) et le rotor est posé de manière coaxiale par rapport à l'axe (15, 19), qui est logé dans ladite fourche de palier (14, 18,) au niveau d'une des extrémités de l'axe.

10. Inclinomètre selon l'une des revendications 1 à 9, **caractérisé en ce que** les capteurs d'angles (21, 22) sont des potentiomètres.

11. Sonnette batteur vibrante pour le montage sur une grue ferroviaire, une excavatrice ou similaire, **caractérisé par** un inclinomètre (8) selon l'une des revendications 1 à 10, dont le boîtier (9) est monté sur la sonnette batteur vibrante (3) .

12. Sonnette batteur vibrante selon la revendication 11, **caractérisé en ce qu'**elle a une fréquence nominale de 30 à 60 Hz, de préférence de 40 à 50 Hz.
